# EUROPÄISCHE PATENTSCHRIFT

(11) **EP 2 671 745 B1**
(45) Veröffentlichungstag und Bekanntmachung des Hinweises auf die Patenterteilung: **24.09.2014**
(21) Anmeldenummer: 13002730.3
(22) Anmeldetag: 27.05.2013
(51) Int. Cl.: B60K 35/00, B60K 37/02, G02B 27/01, G02B 27/62

(54) **Verfahren und Einrichtung zur Ausrichtung eines Head-up-Display-Projektors**
Method and device for aligning a head up display projector
Procédé et dispositif d'orientation d'un projecteur d'affichage tête haute

(30) Priorität: 01.06.2012 DE 102012010889
(43) Veröffentlichungstag der Anmeldung: 11.12.2013
(73) Patentinhaber: AUDI AG, 85045 Ingolstadt (DE)
(72) Erfinder: Zink, Oliver, 82266 Inning (DE)
(74) Vertreter: Thielmann, Frank

(56) Entgegenhaltungen:
- DE-A1-102007 001 266
- DE-A1-102007 045 301
- US-A1- 2006 181 481
- US-A1- 2011 267 701

## Beschreibung

Die Erfindung betrifft ein Verfahren zur Ausrichtung eines in einem Fahrzeug eingebauten Head-up-Display-Projektors nach dem Oberbegriff des unabhängigen Anspruchs 1 und weiterhin eine Einrichtung zur Durchführung des Verfahrens nach dem Oberbegriff des unabhängigen Anspruchs 4.

Zur Darstellung von verkehrsrelevanten oder fahrzeugrelevanten Daten auf einer Windschutzscheibe werden Head-up-Display-Projektoren eingesetzt, die unterhalb der Windschutzscheibe angeordnet sind. Zur klaren und genauen Darstellung der Informationen ist es wichtig, dass der Projektor in einer bestimmten Lage zur Windschutzscheibe eingebaut ist, damit das projizierte Bild nicht für einen Fahrer des Fahrzeugs verschwommen dargestellt wird.

Die genaue Bestimmung der Lage wird üblicherweise mittels einer Lehre durchgeführt, wobei hierzu eine große Lehre auf eine Klebefläche des Karosserierahmens für die Windschutzscheibe aufgelegt wird. Mittels eines an die Lehre montierten Messdorns kann danach die Lage des Projektors bestimmt werden und somit auch eine Ist-Position des Projektors in Übereinstimmung mit einer Soll-Position gebracht werden.

Dieses Verfahren zur Ausrichtung des Projektors ist aufwendig und kann nur ohne die Windschutzscheibe erfolgen, weshalb ein nachträgliches Ausrichten zeitintensiv und teuer ist. Es muss nämlich zuerst die Windschutzscheibe demontiert werden, um die Lehre in den Rahmen aufzusetzen und nach dem Ausrichten auch eine neue Scheibe wieder eingesetzt werden.

Die gattungsbildende Druckschrift DE 10 2007 001 266 A1 offenbart ein Verfahren zur Ausrichtung eines in einem Fahrzeug eingebauten HUD-Projektors zur Darstellung von Informationen auf einer Windschutzscheibe, wobei die Lage des Projektors in dem Fahrzeug mittels einer Lehre bestimmt wird, die einen optischen Sensor, einen Strahlenteiler und Markierungen umfasst, wobei die Lage des Projektors bei eingebauter Windschutzscheibe bestimmt werden kann. Eine Rekalibrierung der Lage des Projektors bzw. einer verzerrten Ansicht einer Kamera erfolgt durch Abgleich eines Testbilds mit einem Testmuster. Alternativ kann eine Rekalibrierung vorgenommen werden, wobei eine vorbestimmte Markierung durch die Kamera erfasst und die Kamera darauf ausgerichtet wird.

Aus der DE 103 34 720 A1 ist eine ähnliche Vorrichtung zur Darstellung von Bildinformationen auf einer Darstellungsfläche in einem Projektionsraum sowie ein Verfahren zur Darstellung der Bildinformationen auf der Darstellungsfläche bekannt. Zum Einlesen von Forminformationen, die eine Form der Darstellungsfläche und/oder von Ausrichtungsinformationen der Projektionseinheit zu der Darstellungsfläche betreffen, werden Form- und/oder Ausrichtungsinformationen berechnet, die zur Ansteuerung einer internen Modulationseinheit verwendet werden, so dass ein auf der Darstellungsfläche dargestelltes Bild mit einem vorgesehenen Bild übereinstimmt. Dazu wird lediglich eine Lichtquelle verwendet. Eine solche Justierung erfordert einen hohen technische Aufwand.

Ein weiteres Verfahren und eine Vorrichtung zur Justierung eines HUD-Projektors für Flugzeuge wird in der Druckschrift US 2006/181481 A1 offenbart. Dabei wird mittels eines Teleskops, innerhalb des Flugzeugcockpits und eines außerhalb des Cockpits angeordneten Kollimators eine theoretische Sichtlinie eines Piloten eingestellt. Das Verfahren ist aufwendig und kostspielig.

Es ist deshalb eine Aufgabe der vorliegenden Erfindung ein Verfahren vorzuschlagen, das kostengünstiger ist und weniger Zeit in Anspruch nimmt. Weiterhin ist es eine Aufgabe der Erfindung eine Einrichtung vorzuschlagen, mit der das Ausrichten schnell und kostengünstig ausgeführt werden kann.

Ein Verfahren zur Lösung der erfinderischen Aufgabe weist die Merkmale des unabhängigen Anspruchs 1 auf. Danach wird ein Verfahren zur Ausrichtung eines in einem Fahrzeug eingebauten Head-up-Display-Projektors zur Darstellung von Informationen auf einer Windschutzscheibe vorgeschlagen, wobei die Lage des Projektors in dem Fahrzeug mittels einer Lehre bestimmt wird, und wobei die Lage des Projektors mit einer eingebauten Windschutzscheibe bestimmt wird. Dadurch dass die Windschutzscheibe nicht entfernt werden muss, kann, sofern Bedarf zur Justierung des Projektors besteht, diese unabhängig von dem Zustand der Windschutzscheibe durchgeführt werden. Dabei ist vorgesehen, dass eine Ist-Position des Projektors mit Hilfe wenigstens eines Lasers, vorzugsweise mit Hilfe von zwei oder mehr Lasern, bestimmt wird, wobei der Laser oder die Laser vorzugsweise auf der Lehre angeordnet ist bzw. sind. Laser können mit einer hohen Präzision betrieben werden, weshalb diese sich besonders gut für die Bestimmung eine Ist-Position eignen. Zur Übereinstimmung der Ist-Position mit einer Soll-Position des Projektors wird ein von dem wenigstens einen Laser auf der Lehre emittierter Lichtstrahl in eine Soll-Lage mit wenigstens einem Bezugspunkt gebracht, der vorzugsweise in dem Fahrzeug angeordnet ist. Zur Bestimmung der Lagegenauigkeit des Projektors verwendet die Lehre Bezugspunkte, die von den Laserstrahlen erfasst werden müssen, damit die Soll-Position des Projektors vorliegt. Deshalb wird der Projektor solange justiert, bis die Bezugspunkte von den Lasern angestrahlt werden.

Nach einer bevorzugten Ausführung der Erfindung kann auf den Projektor eine Lehre aufgesetzt werden, wobei insbesondere mit Hilfe der Lehre eine Relativposition des Projektors zur Windschutzscheibe bestimmt wird. Die Lehre wird nicht mehr wie im Stand der Technik mit dem Fahrzeugrahmen verbunden, sondern direkt mit dem Head-up-Display-Projektor. Somit kann schnell und einfach die Relativposition des Projektors bestimmt werden.

Gemäß einer weiteren Ausführungsform kann entsprechend eines Freiheitsgrades des Projektors ein oder mehrere Laser auf korrespondierende Bezugspunkte ausgerichtet werden. Es ist vorgesehen den Projektor in Längs- und/oder Querrichtung des Fahrzeugs zu verkippen, um die Lagegenauigkeit herzustellen. Darüber hinaus können auch noch weitere Einstellmöglichkeiten vorgesehen sein, die dann vorzugsweise jeweils mit einem zusätzlichen Laser und einem entsprechenden Bezugspunkt eingestellt werden.

Weiterhin wird die erfinderische Aufgabe mit einer Einrichtung gelöst, die die Merkmale des unabhängigen Anspruchs 4 aufweist. Danach handelt es sich um eine Einrichtung zur Ausrichtung eines in einem Fahrzeug eingebauten Head-up-Display-Projektors, umfassend eine Lehre mit wenigstens einem in dem Fahrzeug vorgesehenen Bezugspunkt, wobei die Lehre unmittelbar auf dem Projektor anordenbar ist. Durch die Positionierung der Lehre auf dem Projektor ist keine Referenzposition im Fahrzeug, wie es mit dem Windschutzscheibenrahmen der Fall ist, mehr nötig. Dadurch kann die Windschutzscheibe im Fahrzeug belassen werden und eine kosten- und zeitgünstige Einrichtung bereit gestellt werden. Die Lehre weist wenigstens einen Laser auf, der dazu ausgelegt ist, eine Relativposition des Projektors zu der Windschutzscheibe zu bestimmen. Mit einem Laser sind sehr genaue Messungen bzw. Bestimmungen möglich, weshalb mit einer Lasermessung die Relativposition sehr präzise bestimmbar ist. Des Weiteren umfasst die Lehre wenigstens einen Bezugspunkt, der mit dem Laser korrespondiert, wobei der Bezugspunkt in dem Fahrzeug angeordnet ist. Bei dem Bezugspunkt handelt es sich um einen festgelegten bzw. definierten Punkt innerhalb des Fahrzeugs, durch den die Lehre rein zum Überprüfen einer Einbauposition und einer ggf. daraus resultierenden Ausrichtung des Projektors verwendet werden kann. Eine Distanz zwischen der Lehre und dem Bezugspunkt wird deshalb nicht gemessen.

Nach einer bevorzugten Ausführungsform der Erfindung kann vorgesehen sein, dass die Lehre zur Ausrichtung des Projektors unverrückbar mit dem Projektor verbunden ist. Da die Ausrichtung bzw. Justierung des Projektors eine hohe Präzision erfordert, sollte die Lehre eigenständig mit dem Projektor verbindbar sein, so dass sie beim Ausrichten nicht verrutscht. Dieses gewährleistet eine schnelle, einfache und präzise Ausrichtung.

Deshalb kann vorteilhaft vorgesehen sein, dass in einer Soll-Position des Projektors ein von dem Laser emittierter Lichtstrahl exakt in Richtung des korrespondierenden Bezugspunkts zeigt. Es ist bei der Lehre lediglich darauf zu achten, dass ein Laserstrahl den Bezugspunkt trifft, wodurch festgestellt werden kann, ob der Projektor in seiner Soll-Position liegt.

Gemäß einer Weiterbildung können für den Freiheitsgrad des Projektors eine entsprechende Anzahl Laser und damit korrespondierende Bezugspunkte vorgesehen sein. Der Projektor kann nach dem Einbau in mehreren Richtungen nicht ganz präzise in seiner Aufnahme angeordnet sein, weshalb für jede translatorische und rotatorische Richtung eine Bezugseinheit aus Laser und Bezugspunkt vorgesehen sein kann.

Nach einem weitern bevorzugten Ausführungsbeispiel kann ein erster Bezugspunkt an einer A-Säule und ein zweiter Bezugspunkt an einem Dachhimmel angeordnet sind. In Bezug zum Projektor entsprechen die Positionen des ersten und zweiten Bezugspunkts in etwa einer x- und y-Richtung in einem imaginären Koordinatensystem.

Nachfolgend wird anhand der Zeichnung ein bevorzugtes Ausführungsbeispiel der Erfindung näher erläutet. Darin zeigt die einzige Figur eine perspektivische Ansicht einer Lehre, angeordnet auf einem Head-up-Display-Projektor in einem Fahrzeug.

In der Figur ist schematisch eine Fahrzeugkarosserie 10 mit einem Rahmen 11 für einen Windschutzscheibe dargestellt, wobei die Windschutzscheibe nicht dargestellt ist. Der Rahmen 11 ist seitlich von einer ersten und zweiten (nicht dargestellt) A-Säule 12 des Fahrzeugs begrenzt und schließt nach oben an einem Dachhimmel 13 und nach unten zu einer Motorhaube ab.

In zentraler Position ist weiterhin ein Head-up-Display-Projektor 14 (im Folgenden als HUD bezeichnet) dargestellt, wobei es frei schwebend dargestellt ist. Das HUD 14 ist in bekannter Art und Weise in ein Armaturenbrett im Bereich einer Fahrerseite des Fahrzeugs eingelassen, von wo aus es Daten und Informationen auf die Windschutzscheibe projiziert. Die dargestellte Position des frei schwebenden HUD 14 entspricht in Wesentlich der eingebauten Position in einem Cockpit eines Fahrzeugs.

Auf dem HUD 14 ist ein Gestell 15 angeordnet, das unverrückbar in einer lösbaren Verbindung mit dem HUD 14 verbunden ist. Im gezeigten Ausführungsbeispiel weist das Gestell 15 einen Arm 16 auf, der zumindest zum Teil seitlich an dem HUD 14 entlang geführt ist und in einem unteren Bereich des HUD 14 montiert ist. Alternativ hierzu können aber auch andere Bereiche des HUD 14 als Anlenkungspunkt für das Gestell 15 dienen.

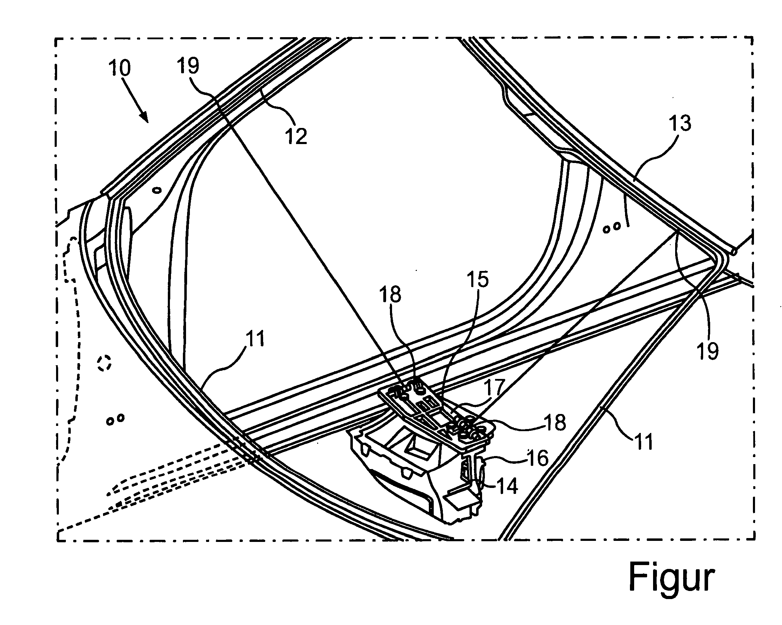

Das Gestell 15 weist ferner einen oberen Bereich 17 auf, der sich im Wesentlich oberhalb des HUD 14 erstreckt. Auf diesem oberen Bereich 17 sind zwei Laser 18 angeordnet, die in der Lage sind, einen Laserstrahl zu emittieren. Die Laser 18 sind in unterschiedliche Richtungen von dem Gestell 15 weggerichtet. In den Ausführungsbeispiel der Fig. 1 weist ein erster Laser 18 in Richtung der A-Säule 12 und ein zweiter Laser in Richtung des Dachhimmels 13.

Das Gestell 15 ist Teil einer Lehre, die dazu ausgelegt ist, eine Ist-Position des HUD 14 zu bestimmen. Hierfür weist die Lehre wenigstens zwei Bezugspunkte 19 auf, die einerseits an der A-Säule 12 und andererseits an dem Dachhimmel 13 vorgesehen sind. Die Lehre ist demnach zweiteilig aufgebaut, wobei die Bezugspunkte 19 mit dem Gestell 15 über die Laserstrahlen quasi "verbunden" sind. Nur mit dieser Verbindung ist die Lehre vollständig, wobei hierzu die Laser 18 exakt in Richtung der Bezugspunkte 19 ausgerichtet sein müssen, wodurch die Bezugpunkte 19 von den Lasern 18 angestrahlt werden.

Die Lehre, bestehend aus einer exakten Ausrichtung des Gestells 15 zu den Bezugpunkten 19, ist demnach derart ausgelegt, dass es einer Soll-Position des HUD 14 entspricht. Die Soll-Position entspricht einer Position, in der die auf der Windschutzscheibe projizierten Daten für den Fahrer klar ablesbar sind. Deshalb muss die HUD 14 genau zur Windschutzscheibe ausgerichtet sein.

Die Positionierung des Gestells 15 auf dem HUD 14 kann einfach gestaltet sein, sofern das Gestell eine vorher definierte Position auf dem HUD 14 einnehmen kann. Ebenfalls ist die Verbindung der beiden Bauteile derart ausgelegt, dass bei einem Ausrichten der HUD 14 das Gestell 15 nicht auf der HUD 14 verrutschen kann. Deshalb wird mit Ausrichten bzw. Verstellen der HUD 14 auch das Gestell 15 zusammen mit den Lasern 18 bewegt.

Es ist darauf hinzuweisen, dass das Gestell mit dem oberen Bereich 17 und den Lasern 18 derart dimensioniert ist, dass es auf dem HUD 14 positioniert werden kann, wenn die Windschutzscheibe montiert ist. Es kann also zwischen das HUD 14 und die Windschutzscheibe angeordnet werden.

Nachfolgend wird das Ausrichten der HUD 14 näher beschrieben. Die HUD 14 ist in einer entsprechenden Aufnahme im Cockpit des Fahrzeugs fest montiert, wobei nach dem Einbau noch eine Feinjustierung vorgenommen werden kann. Hierzu weist es entsprechende Einstellmöglichkeiten auf. Das Gestell 15 wird derart auf das HUD 14 aufgesetzt, dass das Gestell durch die Feinjustierung des HUD 14 mitbewegt werden kann. Nach dem Aufsetzen des Gestells 14 auf das HUD 14 werden die Laser 18 eingeschaltet, wodurch diese jeweils einen Laserstrahl emittieren. Die Laser 18 sind in Richtung der Bezugspunkte 19 gerichtet, weshalb sie in einer Soll-Position des HUD 14 von den Lasern 18 angestrahlt werden.

Im Falle, dass eine Ist-Position des HUD 14 von der Soll-Position abweicht, werden die Bezugspunkte 19 von den Laserstrahlen nicht angestrahlt. Es ist deshalb für gewöhnlich erst einmal zur Feinjustierung die Feststellung der Ist-Position des HUD 14 durchzuführen, wobei hierzu ein Abweichen der Laserstrahlen von den jeweiligen Bezugspunkten 19 ermittelt wird.

Die Ausrichtung des HUD 14 erfolgt gewöhnlich über eine Achseneinstellung in einer Längs- und/oder Querrichtung des HUD 14 bzw. der Fahrzeugkarosserie 10. Somit sind auch zwei Laser und entsprechende Bezugspunkte ausreichend, um ein klare Darstellung der Informationen auf der Windschutzscheibe zu ermöglichen. Alternativ können auch mehr Laser 18 verwendet werden.

Nach Feststellung der Ist-Position wird das HUD 14 entsprechend der Abweichung von der Soll-Position eingestellt. Dabei wird das HUD 14 entweder nach hinten oder vorne und/oder nach links oder rechts verkippt. Die Soll-Position ist erreicht, sobald die Bezugpunkte 19 direkt von den Lasern 18 angestrahlt werden. Danach kann das Gestell 15 demontiert werden.

Die Bezugspunkte 19 können punktuelle oder längliche Markierungen auf der Fahrzeugskarosserie 10 oder einem anderen festen Bauteil des Fahrzeugs sein. Durch das Verkippen des HUD 14 um zwei Achsen, können die Bezugspunkte 19 durch die Laserstrahlen exakt getroffen werden.

Es ist weiterhin möglich, die Lehre für jedes hergestellte Fahrzeug einzustellen. Nach Fertigung des Fahrzeugs wird dieses erst einmal vermessen, sodass damit die genaue Lage des HUD 14 festgelegt wird. Erst dann kann mit der an die Geometrie jedes Fahrzeugs angepasste Lehre die Feinjustierung durchgeführt werden.

## Patentansprüche

1. Verfahren zur Ausrichtung eines in einem Fahrzeug eingebauten Head-up-Display-Projektors (14) zur Darstellung von Informationen auf einer Windschutzscheibe, wobei die Lage des Projektors (14) in dem Fahrzeug mit einer eingebauten Windschutzscheibe mittels einer Lehre bestimmt wird,
**dadurch gekennzeichnet, dass**
eine Ist-Position des Projektors (14) mit Hilfe von zwei oder mehr Lasern (18) bestimmt wird, wobei die Laser (18) auf der Lehre angeordnet sind und wobei
zur Übereinstimmung der Ist-Position mit einer Soll-Position des Projektors (14) die von den wenigstens zwei Lasern (18) auf der Lehre emittierten Lichtstrahlen in eine Soll-Lage mit einem jeweils einem Laser korrespondierenden Bezugspunkt (19) gebracht werden, die in dem Fahrzeug angeordnet sind.

2. Verfahren nach Anspruch 1,
**dadurch gekennzeichnet, dass**
die Lehre auf den Projektor aufgesetzt wird, wobei mit Hilfe der Lehre eine Relativposition des Projektors (14) zur Windschutzscheibe bestimmt wird.

3. Verfahren nach Anspruch 1 oder 2,
**dadurch gekennzeichnet, dass**
entsprechend einem Freiheitsgrad des Projektors (14) zwei oder mehrere Laser (18) auf die korrespondierenden Bezugspunkte (19) ausgerichtet werden.

4. Einrichtung zur Ausrichtung eines in einem Fahrzeug eingebauten Head-up-Display-Projektors (14), mit einer Lehre die unmittelbar auf dem Projektor (14) angeordnet ist,
**dadurch gekennzeichnet, dass**
die Lehre umfasst:
zwei oder mehr Laser (18) die auf der Lehre zum Bestimmen einer Relativposition des Projektors (14) zu der Windschutzscheibe angeordnet sind, und dazu ausgelegt sind, eine Ist-Position des Projektors (14) zu bestimmen, wobei die Laser zur Übereinstimmung der Ist-Position mit einer Soll-Position des Projektors (14) die von den wenigstens zwei Lasern (18) auf der Lehre emittierten Lichtstrahlen in eine Soll-Lage mit einem jeweils einem Laser korrespondierenden Bezugspunkt (19) gebracht werden, der in dem Fahrzeug angeordnet ist.

5. Einrichtung nach Anspruch 4,
**dadurch gekennzeichnet, dass**
die Lehre zur Ausrichtung des Projektors (14) unverrückbar mit dem Projektor (14) verbunden ist.

6. Einrichtung nach Anspruch 4 oder 5,
**dadurch gekennzeichnet, dass**
in einer Soll-Position des Projektors (14) ein von dem Laser (18) emittierter Lichtstrahl exakt in Richtung des korrespondierenden Bezugspunkts (19) zeigt.

7. Einrichtung nach wenigstens einem der vorhergehenden Ansprüche 4 bis 6,
**dadurch gekennzeichnet, dass**
für den Freiheitsgrad des Projektors (14) eine entsprechende Anzahl Laser (18) und damit korrespondierende Bezugspunkte (19) vorgesehen sind.

8. Einrichtung nach wenigstens einem der vorhergehenden Ansprüche 4 bis 7,
**dadurch gekennzeichnet, dass**
ein erster Bezugspunkt (19) an einer A-Säule (12) und ein zweiter Bezugspunkt (19) an einem Dachhimmel (13) angeordnet sind.

## Claims

1. Method for aligning a head-up display projector (14) installed in a vehicle for displaying information on a windshield, wherein the position of the projector (14) in the vehicle with a built-in windshield is determined by means of a gauge, **characterised in that** an actual position of the projector (14) is determined by means of two or more lasers (18), wherein the lasers (18) are arranged on the gauge and wherein in order to make the actual position coincide with a desired position of the projector (14) the light beams emitted by the at least two lasers (18) on the gauge are moved into a desired position each having a reference point (19) corresponding to a laser which is arranged in the vehicle.

2. Method according to claim 1, **characterised in that** the gauge is placed on the projector, a relative position of the projector (14) to the windshield being determined by means of the gauge.

3. Method according to claim 1 or 2, **characterised in that**, in accordance with a degree of freedom of the projector (14), two or more lasers (18) are aligned with the corresponding reference points (19).

4. Device for aligning a head-up display projector (14) installed in a vehicle, having a gauge which is arranged directly on the projector (14), **characterised in that** the gauge comprises:
two or more lasers (18) which are arranged on the gauge for determining a relative position of the projector (14) to the windshield and are designed to determine an actual position of the projector (14), wherein the lasers in order to make the actual position coincide with a desired position of the projector (14) the light beams emitted by the at least two lasers (18) on the gauge are moved into a desired position each having a reference point (19) corresponding to a laser which is arranged in the vehicle.

5. Device according to claim 4, **characterised in that** the gauge for aligning the projector (14) is irreversibly connected to the projector (14).

6. Device according to claim 4 or 5, **characterised in that**, in a desired position of the projector (14), a light beam emitted by the laser (18) points precisely in the direction of the corresponding reference point (19).

7. Device according to at least one of the preceding claims 4 to 6, **characterised in that** for the degree of freedom of the projector (14) a corresponding number of lasers (18) and corresponding reference points (19) are provided.

8. Device according to at least one of the preceding claims 4 to 7, **characterised in that** a first reference point (19) is arranged on an A column (12) and a second reference point (19) is arranged on a roof interior (13).

## Revendications

1. Procédé d'orientation d'un projecteur d'affichage tête haute (14) intégré dans un véhicule afin de présenter des informations sur un pare-brise, la position du projecteur (14) dans le véhicule avec le pare-brise monté étant déterminée au moyen d'un gabarit,
**caractérisé en ce qu'**une position réelle du projecteur (14) est déterminée à l'aide de deux ou plusieurs lasers (18), les lasers (18) étant agencés sur le gabarit et, pour faire coïncider la position réelle avec une position de consigne du projecteur (14), les rayons lumineux émis par les au moins deux lasers (18) sur le gabarit étant amenés dans une position de consigne avec un point de référence (19) correspondant à chaque fois à un laser, lesquels points de référence sont agencés dans le véhicule.

2. Procédé selon la revendication 1, **caractérisé en ce que** le gabarit est placé sur le projecteur, une position relative du projecteur (14) par rapport au pare-brise étant déterminée à l'aide du gabarit.

3. Procédé selon la revendication 1 ou 2, **caractérisé en ce que**, en fonction d'un degré de liberté du projecteur (14), deux ou plusieurs lasers (18) sont orientés sur les points de références correspondants (19).

4. Dispositif d'orientation d'un projecteur d'affichage tête haute (14) intégré dans un véhicule, avec un gabarit qui est agencé directement sur le projecteur (14),
**caractérisé en ce que** le gabarit comprend deux ou plusieurs lasers (18) qui sont agencés sur le gabarit pour déterminer une position relative du projecteur (14) par rapport au pare-brise et qui sont conçus pour déterminer une position réelle du projecteur (14),
les lasers servant à faire coïncider la position réelle avec une position de consigne du projecteur (14) par le fait que les rayons lumineux émis par les au moins deux lasers (18) sur le gabarit sont amenés dans une position de consigne avec un point de référence (19) qui correspond à chaque fois à un laser et qui est agencé dans le véhicule.

5. Dispositif selon la revendication 4, **caractérisé en ce que** le gabarit destiné à l'orientation du projecteur (14) est assemblé de manière immuable au projecteur (14).

6. Dispositif selon la revendication 4 ou 5, **caractérisé en ce que**, dans une position de consigne du projecteur (14), un rayon lumineux émis par le laser (18) pointe exactement dans la direction du point de référence correspondant (19).

7. Dispositif selon au moins l'une des revendications précédentes 4 à 6, **caractérisé en ce que**, pour le degré de liberté du projecteur (14), un nombre correspondant de lasers (18) et donc de points de référence correspondants (19) est prévu.

8. Dispositif selon au moins l'une des revendications précédentes 4 à 7, **caractérisé en ce qu'**un premier point de référence (19) est agencé sur un montant avant (12) et un deuxième point de référence (19) est agencé sur un pavillon (13).
